# EUROPÄISCHE PATENTSCHRIFT

(11) **EP 1 192 363 B1**
(45) Veröffentlichungstag und Bekanntmachung des Hinweises auf die Patenterteilung: **06.10.2004**
(21) Anmeldenummer: 01962549.0
(22) Anmeldetag: 17.07.2001
(51) Int. Cl.: F16C 39/06

(54) **MAGNETISCHE LAGERUNG**
MAGNETIC BEARING ASSEMBLY
MONTAGE SUR PALIER MAGNETIQUE

(30) Priorität: 18.07.2000 DE 10034922
(43) Veröffentlichungstag der Anmeldung: 03.04.2002
(73) Patentinhaber: ATLAS COPCO ENERGAS GMBH, 50999 Köln (DE)
(72) Erfinder: MAY, Hardo, 38124 Braunschweig (DE); CANDERS, Wolf-Rüdiger, 37520 Osterode (DE)
(74) Vertreter: Albrecht, Rainer Harald, Dr.-Ing.
(86) Internationale Anmeldenummer: PCT/DE2001/002602
(87) Internationale Veröffentlichungsnummer: WO 2002/006688

(56) Entgegenhaltungen:
- EP-A- 0 526 325
- US-A- 5 710 469
- KOMORI M ET AL: "VIBRATION SUPPRESSION OF A DISK-SHAPED SUPERCONDUCTOR WITH PD CONTROL" CRYOGENICS, IPC SCIENCE AND TECHNOLOGY PRESS LTD. GUILDFORD, GB, Bd. 37, Nr. 4, 1. April 1997 (1997-04-01), Seiten 195-199, XP000690497 ISSN: 0011-2275

## Beschreibung

Die Erfindung betrifft eine magnetische Lagerung eines Rotors in einem Stator, mit zumindest einem Magnetlager, das einen Statorteil und einen hierzu in Betriebsstellung koaxial und berührungslos angeordneten Rotorteil aufweist, dessen Lagerwirkfläche durch ein einen Permanentmagneten aufweisendes radiales Erregersystem gebildet ist, während der Statorteil einen das radiale Erregersystem unter Einhaltung eines ringförmigen Luftspaltes konzentrisch umschließenden Hochtemperatursupraleiter aufweist.

Eine derartige Ausführungsform lässt sich beispielsweise der DE 197 27 550 A1 entnehmen. Diese Vorveröffentlichung offenbart u.a. eine magnetische Lagerung, bei der der Rotor in zwei kegelstumpfförmigen, sich axial gegenüberliegenden und hinsichtlich ihrer Kegelstumpfform spiegelbildlich zueinander ausgebildeten Magnettagern gelagert ist. Für eine derartige magnetische Doppellagerung ist ein bestimmtes Einfrierverfahren beschrieben, unter dem man die Art der Transition in den supraleitenden Zustand versteht. Danach wird zuerst das eine der beiden Magnetlager und anschließend das andere Magnetlager abgekühlt. Während des Kaltfahrens wird der Rotor zuerst mit seinem einen Lagerabschnitt bis zum Anschlag in das eine Magnetlager verschoben und anschließend bis zum Anschlag in das andere Magnetlager verschoben. Nach der Abkühlung beider Magnetlager ergibt sich dann eine axiale Verspannung der beiden wirksamen Lagerabschnitte des Rotors. Bei einem abgewandelten Verfahren zum Einbringen des Rotors in seine Betriebsstellung bei Verwendung einer magnetischen Doppellagerung wird ein Rotor mit vertikaler Achse verwendet, der nach oben in das obere Magnetlager bis zur Anlage des Rotorteils an dessen Statorteil geschoben wird, worauf beide Magnetlager gleichzeitig kalt gefahren und anschließend der Rotor freigegeben werden.

Im Sprachgebrauch haben sich für drei unterschiedliche Einfrierverfahren folgende Bezeichnungen eingebürgert:
- Einfrieren ohne Feld (Zero Field Cooling) = ZFC
- das Einfrieren unter Betriebsfeld in Arbeitsposition oder mit Verschiebung zur Arbeitsposition (Operational Field Cooling) = OFC und (Operational Field Cooling with Offset) = OFCo oder
- das Einfrieren in größtmöglicher Annäherung an den Erregermagneten (Maximum Field Cooling) = MFC.

All diesen Methoden gemeinsam ist, dass das zu lagernde Bauteil, beispielsweise der Rotor einer Maschine, nach dem Einfrieren aus einer Einfrierposition durch Kräfte, z.B. Eigengewicht oder Betriebslasten, in die Betriebsposition verschoben werden muss. Wegen der nichtlinearen Federkennlinie des Lagers, die bei OFC, OFCo, ZFC häufig progressiv, beim MFC hingegen degressiv ist, ist für diese Verschiebung ein Mindestweg erforderlich, um in einen Arbeitspunkt mit ausreichender Steifigkeit zu gelangen. Dabei ist als Nebenbedingung häufig gefordert, dass der Arbeitspunkt des Lagers mit der geometrischen Mittellinie des Lagergehäuses zusammenfällt. Bei vielen Anwendungsfällen ist dieser verfügbare Bewegungsfreiheitsgrad des Rotors jedoch aus konstruktiven Gründen stark eingeschränkt. Dies hat zur Folge, dass die erforderliche Steifigkeit des Lagers im Arbeitspunkt durch eine entsprechend große Oberfläche eingestellt werden muss, was jedoch unnötig hohe Kosten und unpraktikabele Abmessungen des Lagers zur Folge hat.

Der Erfindung liegt somit die Aufgabe zugrunde, die spezifische Steifigkeit von supraleitenden Lagerungen unter Vermeidung vorstehender Nachteile zu verbessern.

Ausgehend von der eingangs beschriebenen magnetischen Lagerung wird diese Aufgabe erfindungsgemäß dadurch gelöst, dass der Hochtemperatursupraleiter in zumindest zwei kreissegmentförmige HTSL-Teilschalen geteilt ist, die aus einer Position bei warmem Lagerzustand, in der jede HTSL -Teilschale von dem radialen Erregersystem einen ersten radialen Abstand aufweist, nach dem Übergang in den supraleitenden Zustand über einen Aktuator in radialer Richtung in eine Arbeitsposition mit einem zweiten, kleineren radialen Abstand (Betriebsspalt) von dem radialen Erregersystem gegeneinander verschiebbar sind.

Zur Gewichtskompensation des Rotorgewichtes kann es zweckmäßig sein, wenn die beiden Halbschalen in ihrer warmen Position von dem radialen Erregersystem einen unterschiedlichen ersten radialen Abstand aufweisen.

Eine erfindungsgemäße magnetische Lagerung kann ferner gekennzeichnet sein durch eine zusätzliche Axiallagerung, bei der zwei einander gegenüberliegende, in axialem Abstand voneinander angeordnete, jeweils mit Permanentmagneten bestückte axiale Erregersysteme jeweils eine axial gerichtete ringscheibenförmige Lagerwirkfläche des Rotorteils bilden, denen als Statorteil jeweils eine koaxial zum Rotorteil angeordnete plane ringscheibenförmige HTSL-Axiallagerscheibe zugeordnet ist, die aus einer Position beim warmen Lagerzustand, in der jede HTSL-Axiallagerscheibe von dem zugeordneten axialen Erregersystem einen ersten axialen Abstand aufweist, nach dem Übergang in den supraleitenden Zustand über einen Aktuator in axialer Richtung in eine Arbeitsposition mit einem zweiten, kleineren axialen Abstand von dem axialen Erregersystem voneinander weg verschiebbar sind.

Weitere Merkmale der Erfindung sind Gegenstand der Unteransprüche und werden in Verbindung mit weiteren Vorteilen der Erfindung anhand von Ausführungsbeispielen näher erläutert.

In der Zeichnung sind zwei als Beispiele dienende Ausführungsformen der Erfindung schematisch dargestellt. Es zeigen
- **Figur 1**: einen Längsschnitt durch eine magnetische Radiallagerung eines Rotors;
- **Figur 2**: in gegenüber Figur 1 etwas vergrößertem Maßstab einen Querschnitt durch eine magnetische Radiallagerung eines Rotors;
- **Figur 3**: einen Längsschnitt durch eine magnetische Axiallagerung eines Rotors und
- **Figur 4**: Kraft-Weg-Kennlinien für eine obere und eine untere Lagerhälfte einer Ausführungsform gemäß Figur 2.

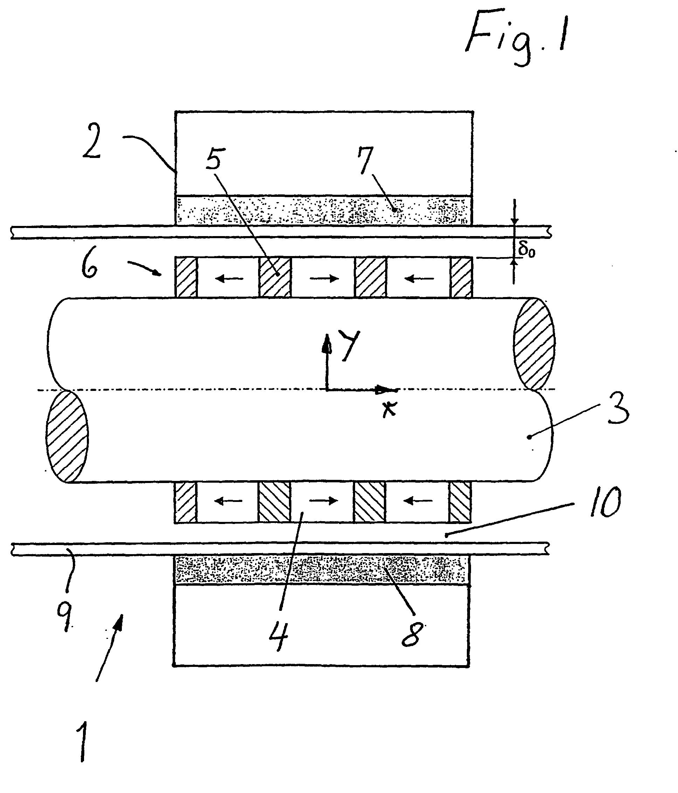

Figur 1 zeigt ein Radial-Magnetlager 1, das einen Statorteil 2 und einen hierzu in Betriebsstellung koaxial berührungslos angeordneten, als Welle dargestellten Rotorteil 3 aufweist, dessen Lagerwirkfläche durch ein Permanentmagneten 4 mit zwischengeschalteten Polschuhen 5 aufweisendes radiales Erregersystem 6 gebildet ist.

Der Statorteil 2 weist einen das radiale Erregersystem 6 unter Einhaltung eines ringförmigen Luftspaltes 10 konzentrisch umschließenden Hochtemperatursupraleiter (HTSL) auf, der erfindungsgemäß in zwei kreissegmentförmige HTSL-Halbschalen 7, 8 geteilt ist, die auf ihrer dem radialen Erregersystem 6 zugewandten Segmentfläche mit einer thermischen Isolierung 9 abgedeckt sind und in ihrer in Figur 1 dargestellten Arbeitsposition von dem die Lagerwirkfläche bildenden radialen Erregersystem 6 einen radialen Abstand δₒ aufweisen.

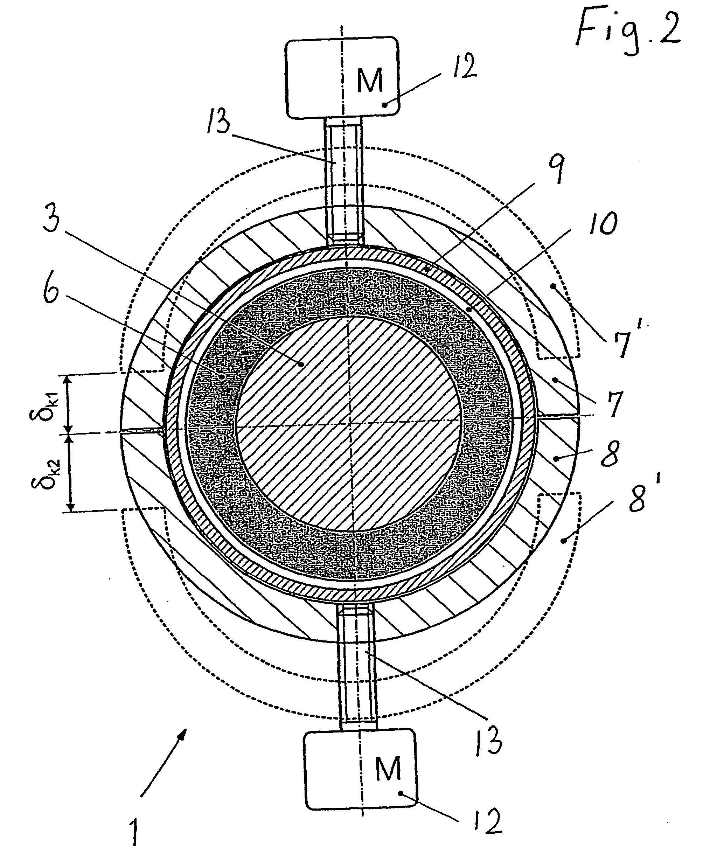

Figur 2 lässt erkennen, dass die beiden HTSL-Halbschalen 7, 8 bei warmem Lagerzustand die gestrichelt eingezeichneten Positionen einnehmen, in der die obere HTSL-Halbschale 7' von der mittleren Trennfuge einen radialen Abstand δₖ₁ und die untere HTSL-Halbschale 8' einen radialen Abstand von ₖ₂ aufweist, wobei in dem gezeigten Ausführungsbeispiel δₖ₂ > δₖ₁ ist. Die HTSL-Halbschalen 7, 8 werden vor dem Übergang in den supraleitenden Zustand mit Hilfe eines Aktuators 12, der eine Motorspindel 13 aufweisen kann, in die gestrichelt eingezeichnete Position auseinandergefahren, so dass sich eine radiale Luftspaltdicke δₖ > δₒ ergibt. Nachdem das Lager unter die Sprungtemperatur heruntergekühlt worden ist, werden die HTSL-Halbschalen 7, 8 mit Hilfe der Aktuatoren 12 in die mit ausgezogenen Linien dargestellte Arbeitsposition zusammengefahren, bis sich der in Figur 1 eingezeichnete Betriebsspalt δₒ einstellt.

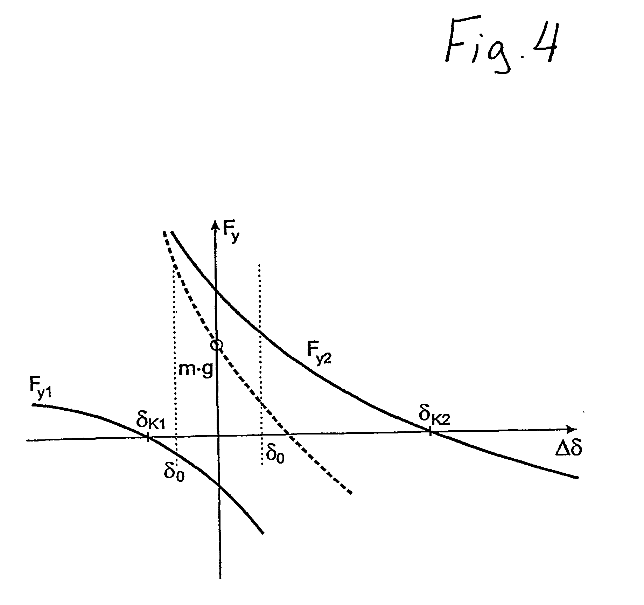

Gemäß Figur 2 sind die Radialspalte δₖ für die obere und untere Lagerschale 7', 8' unterschiedlich gewählt, um durch diese Unsymmetrie eine Gewichtskompensation des Rotorgewichtes zu erzielen, wobei der Rotorteil 3 nahezu exakt in der geometrischen Mitte des Radial-Magnetlagers 1 verbleibt. Aufgrund der jetzt für die obere HTSL-Halbschale 7 und untere HTSL-Halbschale 8 progressiven Kraft-Weg-Kennlinie kann nunmehr bei entsprechender Auslegung der Aktuatoren 12 ein Arbeitspunkt der Lagerung eingestellt werden, der eine deutlich höhere Steifigkeit im Arbeitspunkt aufweist. Verwiesen wird hierzu auf Figur 4, wo die prinzipiellen Kennlinien des OFCo-Verfahrens für die obere und untere HTSL-Halbschale 7, 8 dargestellt ist. In diesem Diagramm gibt der auf der F_{γ}-Kraftachse angegebene Punkt m · g das Gewicht des gesamten Rotors an.

Durch Überlagerung der Steifigkeitskennlinien lässt sich für jede HTSL-Halbschale/radiale Erregersystem-Kombination eine erhöhte Steifigkeit der Gesamtlagerung im Arbeitspunkt erzielen.

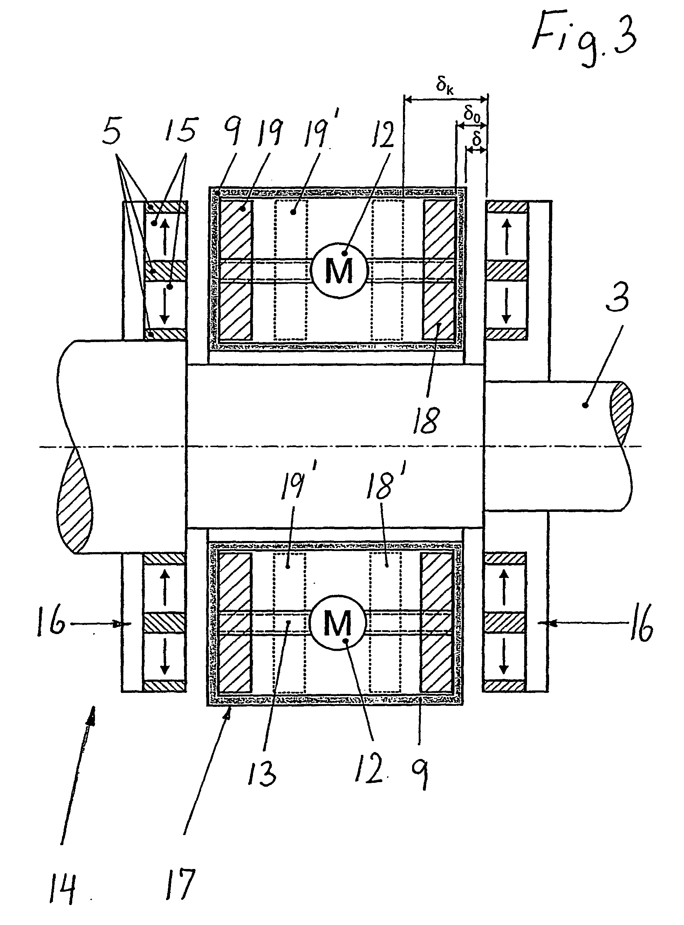

Figur 3 zeigt eine Axiallagerung 14, die zusätzlich zu dem vorstehend beschriebenen Radial-Magnetlager 1 vorgesehen werden kann.

Die Axiallagerung 14 weist zwei einander gegenüberliegende, in axialem Abstand voneinander angeordnete, jeweils mit Permanentmagneten 15 bestückte axiale Erregersysteme 16 auf, die jeweils eine axial gerichtete ringscheibenförmige Lagerwirkfläche des Rotorteils 3 bilden. Diesen beiden axialen Erregersystemen 16 ist als Statorteil 17 jeweils eine koaxial zum Rotorteil 3 angeordnete plane ringscheibenförmige HTSL-Axiallagerscheibe 18, 19 zugeordnet, die aus einer gestrichelt eingezeichneten Position bei warmem Lagerzustand, in der jede HTSL-Axiallagerscheibe 18', 19' von dem zugeordneten axialen Erregersystem 16 einen ersten axialen Abstand δₖ aufweist, nach dem Übergang in den supraleitenden Zustand über einen Aktuator 12 in axialer Richtung in eine in durchgehenden Linien dargestellte Arbeitsposition mit einem zweiten, kleineren axialen Abstand δₒ von dem axialen Erregungssystem 16 voneinander weg verschiebbar sind.

Die sinngemäße Übertragung des für ein Radial-Magnetlager vorstehend beschriebenen Einfrierverfahrens auf eine Axiallagerung ist besonders vorteilhaft, da gerade bezüglich des axialen Lagerungsfreiheitsgrades bei zahlreichen Anwendungen eine steife Führung des Rotors verlangt wird. Dabei kann bei der erfindungsgemäßen Gestaltung der Axiallagerung auf eine Teilung der planen Axiallagerflächen verzichtet werden; es kommt nur auf eine gegensinnige axiale Verschiebung zweier Lagerflächen an, wobei stets jeweils zwei sich axial gegenüberliegende Lagerflächen gegeneinander verspannt werden.

Ist eine axiale Führung des Rotors über entsprechend ausgebildete Radiallagerflächen sichergestellt, so ist es zweckmäßig, durch eine entsprechende Steuerung bzw. einen geeignet ausgelegten Aktuator beim Zusammenfahren der HTSL-Halbschalen 7, 8 auch für eine Axialverschiebung der HTSL-Axiallagerscheiben zu sorgen, so dass sich gleichzeitig eine Vorspannung in radialer und axialer Richtung erzielen lässt.

Die erfindungsgemäß erzielte radial oder gegebenenfalls axial und radial vorgespannte Lagerung weist eine Anisotropie der Steifigkeit auf, die von der Zahl der verwendeten HTSL-Teilschalen des Radial-Magnetlagers 1 abhängig ist. Bei vorzugsweise zwei verwendeten HTSL-Halbschalen 7, 8 ergeben sich unterschiedliche Steifigkeiten in der Normalenrichtung y (siehe Figur 1) und in der hierzu Orthogonalenrichtung x (siehe Figur 1). Diese Anisotropie kann beim Durchfahren kritischer Drehzahlen vorteilhaft genutzt werden.

## Patentansprüche

1. Magnetische Lagerung eines Rotors in einem Stator, mit zumindest einem Magnetlager (1), das einen Statorteil (2) und einen hierzu in Betriebsstellung koaxial und berührungslos angeordneten Rotorteil (3) aufweist, dessen Lagerwirkfläche durch ein einen Permanentmagneten (4) aufweisendes radiales Erregersystem (6) gebildet ist, während der Statorteil (2) einen das radiale Erregersystem (6) unter Einhaltung eines ringförmigen Luftspaltes (10) konzentrisch umschließenden Hochtemperatursupraleiter aufweist, **dadurch gekennzeichnet, dass** der Hochtemperatursupraleiter in zumindest zwei kreissegmentförmige Hochtemperatursupraleiten-Teilschalen (7, 8) geteilt ist, die aus einer Position bei warmem Lagerzustand, in der jede Hochtemperatursupraleiten-Teitschale (7', 8') von dem radialen Erregersystem (6) einen ersten radialen Abstand (δₖ) aufweist, nach dem Übergang in den supraleitenden Zustand über ein Aktuator (12) in radialer Richtung in eine Arbeitsposition mit einem zweiten, kleineren radialen Abstand (δₒ) von dem radialen Erregersystem (6) gegeneinander verschiebbar sind.

2. Magnetische Lagerung nach Anspruch 1, **dadurch gekennzeichnet, dass** der Hochtemperatursupraleiter in zwei Halbschalen (7, 8) geteilt ist.

3. Magnetische Lagerung nach Anspruch 1 oder 2, **dadurch gekennzeichnet, dass** der Aktuator (12) eine Motorspindel (13) aufweist.

4. Magnetische Lagerung nach Anspruch 2 oder 3, **dadurch gekennzeichnet, dass** die beiden Halbschalen (7, 8) in ihrer warmen Position von dem radialen Erregersystem (6) einen unterschiedlichen ersten radialen Abstand (δₖ₁,δₖ₂) aufweisen.

5. Magnetische Lagerung nach einem der vorhergehenden Ansprüche, **gekennzeichnet durch** eine zusätzliche Axiallagerung (14), bei der zwei einander gegenüberliegende, in axialem Abstand voneinander angeordnete, jeweils mit Permanentmagneten (15) bestückte axiale Erregersysteme (16) jeweils eine axial gerichtete ringscheibenförmige Lagerwirkfläche des Rotorteils (3) bilden, denen als Statorteil (17) jeweils eine koaxial zum Rotorteil (3) angeordnete plane ringscheibenförmige HTSL-Axiallagerscheibe (18, 19) zugeordnet ist, die aus einer Position beim warmem Lagerzustand, in der jede HTSL-Axiallagerscheibe (18, 19) von dem zugeordneten axialen Erregersystem (16) einen ersten axialen Abstand (δₖ) aufweist, nach dem Übergang in den supraleitenden Zustand über einen Aktuator (12) in axialer Richtung in eine Arbeitsposition mit einem zweiten, kleineren axialen Abstand (ₒ) von dem axialen Erregersystem (16) voneinander weg verschiebbar sind.

6. Magnetische Lagerung nach Anspruch 5, **gekennzeichnet durch** eine Steuerung, die eine gleichzeitige Radial- und Axialverschiebung der HTSL-Teilschalen (7, 8) sowie der HTSL-Axiallagerschalen (18, 19) bewirkt.

## Claims

1. A magnetic bearing assembly of a rotor in a stator, comprising at least one magnetic bearing (1) having a stator part (2) and a rotor part (3) arranged coaxially thereto in the operating position and without contacting said stator part, with the bearing effective area of said rotor part being formed by a radial exciting system (6) comprising a permanent magnet (4), whereas the stator part (2) has a high-temperature superconductor concentrically surrounding the radial exciting system (6) while maintaining an annular air gap (10), **characterised in that** the high-temperature superconductor is divided in at least two circle segment-shaped high-temperature superconductor partial shells (7, 8) that can be displaced against one another via an actuator (12) in the radial direction after the transition into the superconducting state, from a position in the hot condition of the bearing in which each high-temperature superconductor partial shell (7', 8') has a first radial distance (δₖ) from the radial exciting system (6), into a working position with a second, smaller distance (δₒ) from the radial exciting system (6).

2. The magnetic bearing assembly as claimed in Claim 1, **characterised in that** the high-temperature superconductor is divided in two half-shells (7, 8).

3. The magnetic bearing assembly as claimed in Claim 1 or 2, **characterised in that** the actuator (12) comprises a motor spindle (13).

4. The magnetic bearing assembly as claimed in Claim 2 or 3, **characterised in that** in their hot position, the two half-shells (7, 8) have different first radial distances (δₖ₁, δₖ₂) from the radial exciting system (6).

5. The magnetic bearing assembly as claimed in any one of the preceding claims, **characterised by** an additional axial bearing (14) in connection with which two axial exciting systems (16) opposing each other and arranged with an axial spacing from each other and each fitted with permanent magnets (15) each form an axially aligned, annular disk-shaped bearing effective area of the rotor part (3), and with a plane annular disk-shaped HTSC axial bearing disk (18, 19) being associated with each of said bearing effective areas as the stator part (17), said axial bearing disks being displaced from a position in the hot state of the bearing, in which each HTSC axial bearing disk (18, 19) has a first axial distance (δₖ) from the associated axial exciting system (16), are displaceable away from each other after the transition into the superconducting state via an actuator (12) in the axial direction, into a working position with a second, smaller axial distance (δₒ) from the axial exciting system (16).

6. The magnetic bearing assembly as claimed in Claim 5, **characterised by** a control effecting a simultaneous radial and axial displacement of the HTSC partial shells (7, 8) as well as of the HTSC axial bearing disks (18, 19).

## Revendications

1. Montage sur palier magnétique d'un rotor dans un stator, comportant au moins un palier magnétique (1) qui présente une partie stator (2) et une partie rotor (3) disposée par rapport à celle-ci, en position de fonctionnement, de façon coaxiale et sans contact, et dont la surface active de palier est formée par un système d'excitation radial (6) présentant un aiment permanent (4), tandis que la partie stator (2) présente un supraconducteur à haute température entourant de façon concentrique le système d'excitation radial (6) en préservant un entrefer annulaire (10),
**caractérisé en ce que**
le supraconducteur à haute température est divisé en au moins deux coquilles partielles de supraconducteur à haute température (7, 8) en forme de segment de cercle et qui, à partir d'une position correspondant à un état chaud du palier, dans laquelle chaque coquille partielle de supraconducteur à haute température (7', 8') présente par rapport au système d'excitation radial (6) une première distance radiale (δ_{K}), sont mobiles l'une par rapport à l'autre en direction radiale après le passage à l'état supraconducteur par le biais d'un actionneur (12), afin d'adopter une position de travail avec une deuxième distance radiale plus faible (δ₀) par rapport au système d'excitation radial (6).

2. Montage sur palier magnétique selon la revendication 1,
**caractérisé en ce que**
le supraconducteur à haute température est divisé en deux demi-coquilles (7, 8).

3. Montage sur palier magnétique selon la revendication 1 ou 2,
**caractérisé en ce que**
l'actionneur (12) présente un arbre moteur (13).

4. Montage sur palier magnétique selon la revendication 2 ou 3,
**caractérisé en ce que**
les deux demi-coquilles (7, 8), dans leur position à chaud par rapport au système d'excitation radial (6), présentent une première distance radiale (δ_{K1}, δ_{K2}).

5. Montage sur palier magnétique selon l'une quelconque des revendications précédentes,
**caractérisé par**
un montage sur palier axial supplémentaire (14), dans lequel deux systèmes d'excitation axiaux (16) disposés l'un en face de l'autre, à une certaine distance axiale l'un de l'autre, et respectivement équipés d'aimants permanents (15), forment respectivement une surface active de palier de la partie rotor (3) en forme de disque annulaire orientée en direction axiale, et auxquels sont respectivement associés, en tant que stator (17), chaque fois un disque de palier axial de supraconducteur à haute température (18, 19) en forme de disques annulaires plans disposés de façon coaxiale par rapport à la partie rotor (3), qui, à partir d'une position correspondant à un état chaud du palier, dans laquelle chaque disque de palier axial de supraconducteur à haute température (18, 19) présente par rapport au système d'excitation axial (16) associé une première distance axiale (δ_{K}), sont mobiles pour s'éloigner l'un de l'autre en direction axiale après le passage à l'état supraconducteur par le biais d'un actionneur (12), afin d'adopter une position de travail avec une deuxième distance axiale (δ₀) plus faible par rapport au système d'excitation axial (16).

6. Montage sur palier magnétique selon la revendication 5,
**caractérisé par**
une commande qui entraine un déplacement simultané axial et radial des demi-coquilles de supraconducteur à haute température (7, 8) ainsi que des disques de palier axiaux de supraconducteur à haute température (18, 19).
